# EUROPEAN PATENT APPLICATION

(11) **EP 1 840 810 A1**
(43) Date of publication of application: **03.10.2007**
(21) Application number: 07005830.0
(22) Date of filing: 21.03.2007
(51) Int. Cl.: G06Q 10/00, H04M 3/42

(54) **Method and central processing unit for providing a community service for athletes**

(30) Priority: 25.01.2007 EP 07001648; 21.03.2006 EP 06005742
(71) Applicant: Vodafone Holding GmbH, 40213 Düsseldorf (DE)
(72) Inventor: Hoeksel, Sebastiaan, 6229 VN Maastricht (NL); Van den Bos, Lambert, 6247 AG Gronsveld (NL)
(74) Representative: Cullinane, Marietta Bettina

(57) **Abstract**

The present invention relates to a method and a central processing unit (2) for providing a community service for athletes over a communication system. In the method participant-related information data is received at a central processing unit (2) from at least one mobile device (1, 1', 1") of at least one participant of a community service during the activity of the participant. The central processing unit for providing a community service for athletes via a communication system, is characterized in that the central processing unit (2) comprises a receiving unit (8) for receiving participant-related information data from at least one mobile device (1, 1', 1 ") of a participant during the activity of the participant, a processing entity (14) for processing the participant-related information data, wherein the processing entity (14) is at least temporarily connected to a transmission unit (8) for transmitting the processed information data to at least mobile device (1, 1', 1") of at least one participant.

## Description

The present invention relates to a method and a central processing unit for providing a community service for athletes.

With the ever growing interest in fitness and competition it has become common practice to share training results with other athletes. Presently this sharing of training results is for example being carried out by displaying the results on means that are accessible to other athletes, e.g. a web site on the Internet.

In order to exchange or display training results, the athlete has to enter his data into the respective database. The gathering of information and inputting of data into a database is complex, as the relevant data comprises location data, which is not always available to the athlete. To facilitate the sharing of such information, systems have been suggested, wherein the gathering of the location data is automated. An example of such a system is described in CA 2 305 663. With the device suggested in the prior art document, location data is being collected by means of a GPS receiver. In addition condition information, such as temperature, is gathered the usage of sensors. After the race, the data from the device is being transferred to a computer and can be posted on the Internet from there. Other athletes or interested third parties can then access the information.

The drawback of such solutions is that athletes can only use the provided services before or after an exercise.

The problem to be solved by the present invention is therefore to provide a solution allowing improved sharing possibilities of information relating to activities amongst athletes.

The present invention is based on the finding, that this problem can be solved by using real-time information of the activities of an athlete.

According to the first aspect the present invention therefore relates to a method for providing a community service for athletes over a communication system, wherein participant-related information data is received at a central processing unit from at least one mobile device of at least one participant of the community service. The method is characterized in that the information data is received during the activity of the participant.

The community may comprise several participants both active and inactive as well as trainers or observers such as fans or family members. As the participant-related information data is being transferred to and received at a central processing unit during the activity of the athlete, it represents real-time information data. Such real-time information data allows for a variety of usages within a community service for athletes. Athletes according to the present invention are people who are exercising. The invention is thus not limited to professional athletes or people performing competitive sports, but also people going for a walk, cycling to work or in their spare time, and the like.

The central processing unit is preferably located remotely to the mobile devices of the athletes. The communication connection between the mobile device(s) and the central processing unit can be via a communication system such as a wireless or mobile communication network and/or the internet.

Preferably the information data is being processed at the central processing unit and the processed data is being made available to at least one participant. In contrast to the mere gathering of information, that is being offered by the state of the art, this embodiment of the present invention enables the participants of the community service to obtain knowledge about the information data with only minor delay from the time the data has been obtained at the mobile device of an athlete. Hence, an interactive community service can be offered.

According to the invention the processing of the information data can comprise different processing steps both individually or in combination with each other. The processing of the information data may for example comprise storing the information data. The stored information data may be used to provide it to the participant from whom the information data originally stemmed or for other participants. As the information data is being received during the activity of the athlete, it is also possible to use the stored information data of an ongoing activity to provide information data during this activity. One example of such usage is stored information data relating to the beginning of the activity or exercise, which then may be used to compare or process current information data with the stored beginning data. Such processing may be useful to determine the distance travelled by an athlete. This distance processed with, e.g. compared to, distances travelled by other athletes after the same period of time, may be used to generate a ranking of the athletes in real time.

In addition or alternatively it is also possible to forward information data as a processing of the information data. The information data may be forwarded or transmitted within the central processing unit or to an external or remote entity such as another mobile device related to a different participant.

Also information derived or obtained from the information data, for example by means of analysing or combining information data, e.g. time and location related information data, may be forwarded or stored.

Another possible processing step comprises the comparison of the information data to other parameters or data. The information data or the derived information of one participant may be compared to information data or information derived from a different participant. This information data or information used to compare the present information data or information against may be real-time or stored information data or information. This way of processing allows an athlete to adapt his activity to that of another athlete. Such an adaptation is in particular beneficial in competitions or races.

The received information data or derived information may also be compared to position information stored at the central processing device. Such position information can for example be geographical information, in particular maps or route tracks. Such a comparison allows for appropriate route suggestions to be delivered to the athlete presently performing the activity or exercise. Furthermore the comparison allows the tracking or monitoring of an athlete, whereby the observation of a preset route can be checked. Finally, such a comparison allows for the calculation of an estimated arrival time of the athlete at a finish line.

According to a further embodiment, the processing of the information data may include processing of information data with information data derived from at least one other participant. By processing current information data of an athlete with information data relating to at least one other athlete, coaching information to the athlete can be adapted to the behaviour, location or physical condition of the other athletes of a group. The coaching heuristics according to the present invention can consider the individual behaviour, location or physical condition of all athletes and can thus provide a group coaching. The comparison to information obtained from at least one other athlete, in addition provides the possibility for an athlete to select a training partner. This means that the processed data made available to the athlete will be based on a comparison against information data received from the selected athlete. Thereby an athlete exercising at a different location can be coached so that he follows the pace of another athlete. This may be useful when athletes have to follow the pace of a coach during an interval training, comprising periods of slow and fast pace.

Within the processing of information data, information data received from at least two participants may be compared and the comparison result may subsequently be used as a parameter for generating processed data to be made available to at least one participant. The utilization of comparison results for generating processed data, which may be coaching instructions, is beneficial, as the coaching of the group of athletes may be adapted to the behaviour, location or physical condition of one specific athlete within the group. This specific athlete may for example be the weakest or the fastest athlete in the group. Alternatively, an average of received information data or a preset value may be used to generate processed data. Thereby the group of athletes can be trained to achieve a group objective, which may either be preset by the coach or may be based on the average of received information data. An athlete exceeding the group objective may be instructed to slow down whereas an athlete not performing at the group objective yet may be stimulated to reach the objective.

The comparison of information data with information data relating to a different athlete may be used to determine the ranking of an athlete in a competition with at least one other athlete. In this case the information data may be the distance travelled after a certain period of time.

In particular for a comparison to position information stored at the central processing unit the information data received from the active participant or athlete is preferably location-related information. Location-related information may in addition or alternatively also be used to unite a group of athletes. In that case the location-related information of one specific athlete or a sub-group of athletes may be used as a parameter to instruct the remaining athletes of the group. The coaching function can thus navigate individual athletes to the geographic location of the specific athlete or of the sub-group of athletes, so that they can continue to exercise together.

The information data may alternatively or additionally be data indicative of the physical condition of the participant at the time of transmittal. As the information data is being transmitted to the central processing unit in real-time the current condition of the active participant can be monitored. The monitoring can be performed by the central processing unit itself, e.g. by a coaching or training program stored, or by a participant. The data on the physical condition of the participant may also be combined with additional information. In combination with track information for example, an appropriate route may be suggested to the participant according to his current physical condition. Furthermore, the data indicative of the physical condition of a participant may be used to determine a group objective. For example, the heart rate of the weakest athlete may be determined by comparing the heart rate of all participating athletes and may be set as a threshold value. Then all participants of a group may be coached or instructed to adapt the exercise to not exceed the threshold value.

The processed information data can be transferred to the participant from whom the information data has been received. This transmission allows the participant to monitor his physical condition or position. Furthermore the participant can obtain information on his expected arrival time at a finish line or predetermined location. Also route information can be provided to the participant. Finally, the processed information data may be coaching instructions. These coaching instructions may comprise commands to speed up, slow down, change location, information on a group objective, in particular the reaching of the objective or the exceeding of a threshold value.

The identity of a participant may be determined by the central processing unit by an identification of the mobile device such as the SIM-card.

Alternatively or in addition to the transmission to the participant from whom the information data originally stemmed, the processed data can be made available to at least one participant different from the participant from whom the information data has been received. By such a transmission it becomes possible to exchange sport related data during the activity or action of athletes. Hereby competitors can obtain information on the current position of other participants. But also inactive participants, such as a coach or trainer or family members are thereby provided with the possibility to follow the progress and performance of an athlete during the activity in real-time.

The real-time transmission is being achieved by continuously sending presence related information, such as availability of the mobile device and geographic location of the athlete and thus the related mobile device to the central processing unit which is a network entity such as a web server during the exercise. The central processing unit can correlate these presence data and can thus display presence information of other athletes, including a map with the geographic position of the other active community member or participant on a mobile device or for inactive community members for example on a desktop. Also the proximity of other participants to the active participant can be signalled. This can for example be done by means of mechanical vibration of the mobile device.

Especially for competitions or races between participants and to identify other members of a community, the position information stored at the processing unit, which is used for the processing of the information data, is position data relating to a different participant. One participant currently exercising can compare his position and physical condition to that of other participants, who performed the exercise before or to a competitor currently performing the same exercise.

According to a second aspect of the invention, the problem is solved by a central processing unit for providing a community service for athletes via a communication system. The central processing unit is characterized in that the central processing unit comprises a receiving unit for receiving participant-related information data from at least one mobile device of a participant during the activity of the participant, a processing entity for processing the participant-related information data, wherein the processing entity is at least temporarily connected to a transmission unit for transmitting the processed information data to at least one participant. The central processing unit is preferably remotely connected to the at least one mobile device and is in communication connection therewith. The central processing unit may for example be a web server reachable from the mobile device via the Internet.

The central processing unit can furthermore comprise a comparison unit for comparing the received participant-related information data to other received information data and/or to information stored in a storage unit in the central processing unit. In contrast to the mere display of exercising results of individual participants as suggested in the prior art, the comparison unit allows for more in depth information to be provided to the participants of the community. The quality of the information provided is even better, as the received information used for the comparison may be real-time information data. Thus the provided comparison results are of more use to the participants, as they may react thereon.

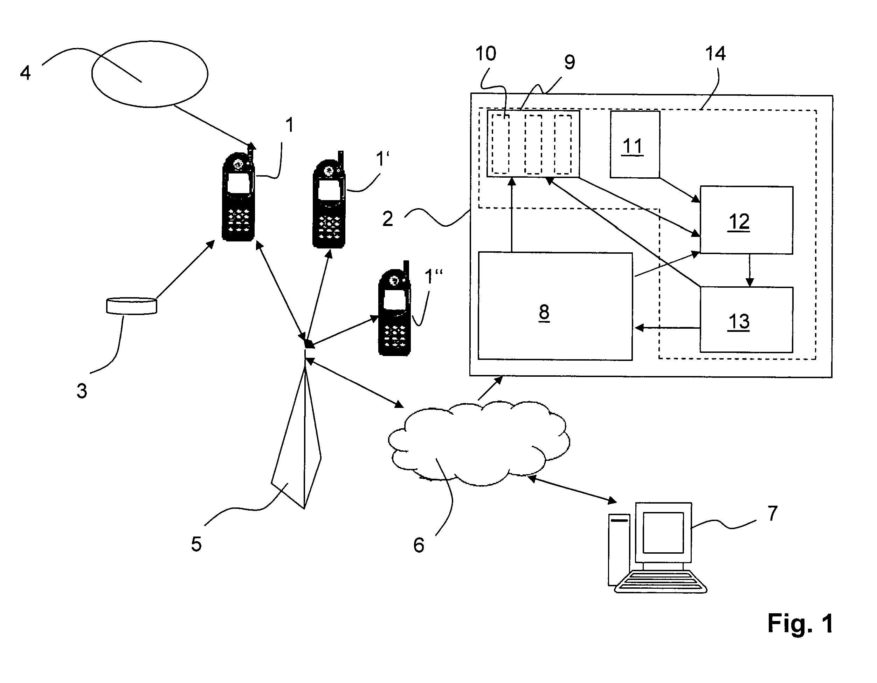

The present invention will now be described in detail with reference to the attached figure 1, which shows a schematic structure of a system to be used for one embodiment of the inventive method.

In Figure 1 the system comprises several mobile devices 1,1' and 1" represented by a cellular phone as well as a remotely located central processing unit 2. Each of the mobile devices 1, 1' and 1" is assigned to a participant of the community. For clarity purposes the usage of the mobile device in the inventive method will hereinafter mainly be describe relating to only one mobile device 1. The other mobile devices 1' and 1" may be used in the same way.

The mobile device 1 is connected to a sensor 3, which for example can be attached to the athletes arm or leg. The connection between the sensor 3 and the mobile device 1 maybe wireless or by means of an appropriate plug provided at the mobile device 1 for cable connection. Furthermore Figure 1 schematically shows a positioning system 4 which uses the mobile device 1 as a receiver for location related data. The communication connection between the mobile device 1 and the central processing unit 2 is represented by a mobile network and the Internet 6. The mobile network is indicated by means of a single base station 5.

Also a computer 7 is shown to be connected to the remote central processing unit 2 via the internet 6.

The structure of the central processing unit 2 comprises in the depicted embodiment five units 8, 9, 11, 12 and 13, wherein the units 9, 11, 12 and 13 can be referred to as the processing entity 14. These units maybe realised as separate physical units or may partially be combined. In particular the units maybe realised as programs.

The receiving and transmission unit 8 is provided for receiving signals and data from and transmitting signals and data to the mobile device 1 via the mobile network and the Internet 6. In addition to the receiving and transmission unit 8 a storage unit 9 is provided. Within the storage unit 9 user profiles 10 are being stored. Furthermore a storage unit for geographic data 11 is provided within the remote processing unit 2. The storage unit for geographical data 11 can be combined with the storage unit 9. The central processing unit 2 further comprises a comparison unit 12 as well as an instruction signal creation unit 13.

The mobile device 1 is adapted to receive signals from a positioning system 4, the information data received via this signal can be used as follows. The mobile device 1 receives location related data from the positioning system 4 and transmits this data to the central processing unit 2. The receiving and transmitting unit 8 may forward this data to the comparison unit 12 which is also connected to the storage unit for geographical information 11. By comparing the current position of the athlete to stored geographical information, such as maps, the comparison unit 12 may determine a possible route for the athlete. Such a determination of a route will preferably be conducted by considering information obtainable from the user profile. The geographical information stored in storage 11 may also include information on steepness or length of potential routes for the athlete to choose from. The comparison unit 12 will identify the appropriate route according to the information from the user profile 10 and the geographical information 11. Preferably the comparison unit 12 will also consider any available information data received from other athletes via their mobile devices 1', 1". Furthermore sensed signals or health data from the athlete can be considered to determine the appropriate route. The comparison results, i.e. a specific route or direction to or on a route will be forwarded to the receiving and transmission unit 8. The thus created direction information will be forwarded to the mobile device 1 and presented to the athlete. The presentation may for example be via display of mobile device 1. The display may also indicate the current location of other athletes in the vicinity.

The physical condition of the athlete can be considered as described hereinafter. Before starting his exercise the athlete can attach the sensor 3 to his body, so that bio data, such as the pulse rate, can be sensed during the exercise. Once the athlete has connected the sensor 3 to the mobile device 1 and has initiated the transmission on the mobile device 1, he can begin his exercise. During the exercise the sent signals from the sensor 3 will be transmitted to the mobile device 1. The mobile device 1 will continuously forward the sent signals to the central processing unit 2, in particular to the receiving and transmission unit 8. The received data or signal maybe processed within the central processing unit 2 to generate health data, if necessary. The sensed signal and/or the generated health data will be forwarded to the comparison unit 12 which is connected to at least the storage unit 9. Via the connection between the storage unit 9 and the comparison unit 12, personalized information relating to the athlete can be retrieved from the storage unit 9. In particular personalized information from a user profile 10 for this specific athlete will be provided to comparison unit 12. By comparing the received sensed signals and/or health data to entries in the user profile 10 deviations from normal conditions or preset exercising regimes can be determent. The comparison result maybe forwarded to an instruction signal creation unit 13. This instruction signal creation unit may also be connected to the storage unit 9. Via the connection to the storage unit 9 the instruction signal creation unit may obtain information for the correlation of the priority of an instruction signal to a presentation mode for mobile device 1 of the respective athlete. The thus generated instruction signal possibly together with priority information or presentation mode information can be forwarded to the receiving and transmission unit 8. From the receiving/transmission unit 8 the instruction signal can be transferred to the mobile device 1 and be presented to the athlete.

With a system as shown in Figure 1 several different options can be realised. Preferably an athlete wanting to participate in the community and use the community service, will register with the service. He can register at the central processing unit 2 for example via his mobile device 1 or by using a computer 7. The central processing unit 2 may then suggest a training schedule based on user data provided by the athlete. If another athlete has already registered for the same sport, training schedule and/or track, the athlete signing in may register to the community, which would then comprise two athletes. Typically the community members will be training for a similar sport event. A community or group may also comprise only one active athlete and one or more inactive participants. Those inactive participants may be the trainer or coach of the athlete and/or friends.

The system as shown in Figure 1 can be used according to the invention to exchange sport related data during an activity, such as riding a bike or running.

The mobile device 1 will continuously send presence related information data, such as availability or geographic location of the athlete, to the central processing unit 2 during the exercise of the athlete. The central processing unit will correlate these presence data and can display presence information of other athletes derived from information data received from other mobile devices 1', 1 ". The display may include a map with the geographic position of the other active community members. The proximity of another community member may also be signalled by a haptic signal, such as a mechanical vibration of the mobile device 1 or a band worn by the athlete. The exchange of sport related data may be initiated by an athlete by selecting another community member. This selection can be performed by clicking on a map location where the other athlete is being displayed.

Inactive community members can participate by tracking the performance and progress of the athlete remotely, for example via the internet 6. Inactive participants may also start a communication session with the active participant, for example for remote coaching purposes by a trainer. The communication session between participants, active or inactive, can include voice, measured sensor data describing the performance and geographic location of the respective active participant.

Hence, real-time communication with other athletes who are also currently busy with an exercise is possible. During the communication session, exercise related data can be exchanged, either by direct feedback from the athlete, i.e. forwarding received information data, or by real-time recorded data describing the athlete's performance.

The invention also allows the conducting of real-time competition such as a race. Normally outdoor competitions are difficult, because a fixed infrastructure has to be setup along side the competition route. In addition every athlete needs to carry some form of user identity that can be read by sensors of the fixed infrastructure. With the invention these time and cost consuming measures are no longer necessary. In the present invention, the central processing unit 2 can manage a set of competition routes. For each competition route a high score list can be stored that can include both real-time, that means predicted, and finished positions. The athletes can be identified by the mobile device 1 used to establish the network connectivity to the central processing unit. Preferably the geographic location is continuously measured and used to verify that athletes remain on the track. Hence, cheating can be determined without the necessity of personal monitoring the track. In addition, the measured location together with the stored competition route can be used to guide the athlete over the competition track. Finally, the progress on the competition route together with the measured time since start can be used to predict the athlete's end position in the high score list.

Athletes can compete against high score entries from previous effort in a track, including their own, and against predicted high score entries of ongoing efforts. Hence, the competition becomes more challenging for the athletes. In addition, the athletes can compete on competition routes at any point in time and are no longer depended on a specific sport event date or a specific organisation.

User A, who is participating in a competition, for example a race, carries his mobile phone 1. User B who is participating in the same race as user A and will hereinafter also be referred to as the competitor also carries his mobile phone 1'. At a start point of the race user A may be at a location P0A and User B may be at a location POB. The location will be determined by the positioning system 4, which will transmit the respective location-related information data to the mobile phones 1 and 1', respectively. The location P0A will be transmitted from the mobile phone 1 to the central processing unit 2. At the central processing unit 2, the location P0A may be stored in storage unit 9. The location P0A may be stored together with an indication of the time at which the location P0A was determined T0A or with an indication of the time at which the location P0A was received at the central processing unit 2. The location P0A and also the time T0A will be stored in the storage unit 9 linked to the user A, i.e. for user A. T0A will preferably be set to zero.

In regular intervals, the current location P1A, P2A, etc. at the times T1A, T2A, etc. of the user A will be transmitted to the central processing unit 2. With the starting location P0A being stored in the storage unit 9 of the processing unit, the distance travelled by user A can be determined at the central processing unit 2. Alternatively, the distance travelled by user A can be determined at the positioning system 4 or in the mobile phone 1 and can then be sent to the central processing unit 2. In either case, the distance travelled by user A will be available at the central processing unit 2.

Also for user B the current locations P1 B, P2B, etc. at the times T1 B, T2B, etc will be transmitted to the central processing unit 2. At the central processing unit 2, the distance travelled by user B can be calculated. Alternatively, the distance travelled by user B can be determined in the positioning system 4 or in the mobile phone 1' and can then be transmitted to the central processing unit 2.

Preferably the point of time at which the information data is transmitted to the central processing unit 2 are identical for user A and user B as well as for other competitors, i.e. T0A equals T0B, T1A equals T1 B, etc.

As the distance travelled by the respective user A or B will be available for different points of time, a real-time ranking can be carried out at the central processing unit 2. In particular, the distance travelled by user A (P1A-P0A) can be compared to the distance travelled by user B (P1B-P0B) in the same period of time, e.g. 15 minutes.

The invention also allows for a dynamic discovery of new routes. The central processing unit may determine routes of interest to the athlete based upon a user profile and the current geographical location. This route data can be transmitted to the mobile device of the athlete and displayed thereon. The athlete can thereby have access to a large and rich set of route information whenever he wants. Since the map information is stored in the central processing unit, the mobile device does not require large calculation power and memory.

Finally, the present invention allows for a group coaching for athletes. In that case, information data received from a mobile device 1 at the receiving and transmission unit 8 for one athlete may be processed in the comparison unit 12 with information data received from other mobile devices 1', 1". In the comparison unit 12 or in a separate unit (not shown) the received information data may be used to generate threshold values or other parameters necessary to generate coaching instructions.

In one example, the coaching logic applied within the central processing unit 2 determines the information data relating to different athletes or participants and identifies the information data with the highest or lowest value. For example the heart rate may be used in this case. Once this value has been identified, it will be used as a threshold value for further coaching instructions to all athletes assigned to the community service or to the group within the community service. It is also possible to use data stored in the user profiles stored in storage unit 9 to determine a threshold value. For example, the maximum acceptable heart rate of the weakest athlete in the group may be used as a threshold value.

The threshold value, which may be used as a parameter for coaching instructions, may also be a preset group objective. This could be a speed or time value. By using such a threshold value, it will be possible for the coaching functionality to instruct an athlete to slow down if information data received at the receiving and transmission unit 8 exceeds this value. The instruction to slow down may be generated in the signal creation unit 13.

Furthermore it will be possible to use the coaching functionality within the central processing unit 2 to navigate individual athletes to a geographic location, so that they can continue to exercise together. In this case, the current location or position information obtained via the positioning system 4 for each athlete can be used.

The setting of threshold values, data to be used for the calculation of threshold values and other parameters of the coaching logic may be preset in the central processing unit 2 or may be input via the mobile devices 1, 1', 1" or the computer 7 by the athletes.

The present invention thus provides a method that allows for a very flexible and easy to establish community service from athletes, as the information data from the athletes is being transmitted and processed in real-time.

## Claims

1. Method for providing a community service for athletes over a communication system, wherein participant-related information data is received at a central processing unit (2) from at least one mobile device (1, 1', 1 ") of at least one participant of a community service, **characterized in that** the information data is received during the activity of the participant.

2. Method according to claim 1, **characterized in that** the information data is being processed at the central processing unit (2) and the processed data is being made available to at least one participant.

3. Method according to claim 1 or 2, **characterized in that** the processing of the information data includes storing the information data, forwarding the information data or information obtained based on the received information data, comparing the information data to information data derived from at least one other participant and / or comparing the information data to position information stored at the central processing unit (2).

4. Method according to claim 3, **characterized in that** the processing of the information data includes processing of information data with information data derived from at least one other participant.

5. Method according to claim 4, **characterized in that** within the processing of information data, information data received from at least two participants is compared and the comparison result is used as a parameter for generating processed data to be made available to at least one participant.

6. Method according to any of claims 1 to 5, **characterized in that** the information data is location-related information.

7. Method according to any of claims 1 to 6, **characterized in that** the information data is data indicative of the physical condition of the participant at the time of transmittal.

8. Method according to any of claims 1 to 7, **characterized in that** the processed information data is being transferred to the participant from whom the information data has been received.

9. Method according to any of claims 1 to 8, **characterized in that** the processed data is being made available to at least one participant different from the participant from whom the information data has been received.

10. Method according to any of claims 3 to 9, **characterized in that** the position information stored at the central processing unit (2) is position data relating to a different participant.

11. Central processing unit for providing a community service for athletes via a communication system, **characterized in that** the central processing unit (2) comprises a receiving unit (8) for receiving participant-related information data from at least one mobile device (1, 1', 1") of a participant during the activity of the participant, a processing entity (14) for processing the participant-related information data, wherein the processing entity (14) is at least temporarily connected to a transmission unit (8) for transmitting the processed information data to at least mobile device (1, 1', 1 ") of at least one participant.

12. Central processing unit according to claim 11, **characterized in that** it comprises a comparison unit (12) for comparing the received participant-related information data to other received information data and/or to information stored in a storage unit (9, 11) in the central processing unit (2).
